# EUROPÄISCHE PATENTSCHRIFT

(11) **EP 2 855 101 B1**
(45) Veröffentlichungstag und Bekanntmachung des Hinweises auf die Patenterteilung: **22.06.2022**
(21) Anmeldenummer: 13722441.6
(22) Anmeldetag: 14.05.2013
(51) Int. Cl.: B25F 5/00

(54) **WERKZEUG**
TOOL
OUTIL

(30) Priorität: 25.05.2012 DE 102012104538
(43) Veröffentlichungstag der Anmeldung: 08.04.2015
(73) Patentinhaber: Gustav Klauke GmbH, 42855 Remscheid (DE)
(72) Erfinder: FRENKEN, Egbert, 52525 Heinsberg (DE); BOBOWICZ, Roman, 42859 Remscheid (DE)
(74) Vertreter: Müller, Enno
(86) Internationale Anmeldenummer: PCT/EP2013/059912
(87) Internationale Veröffentlichungsnummer: WO 2013/174675

(56) Entgegenhaltungen:
- EP-A1- 2 200 145
- EP-A2- 1 833 137
- WO-A1-2007/058596
- CN-Y- 2 659 647
- GB-A- 2 431 433
- JP-A- 2011 229 317
- US-A1- 2005 153 596
- US-A1- 2006 228 936

## Beschreibung

Die Erfindung betrifft ein hydraulisch oder elektromotorisch betriebenes Werkzeug nach den Merkmalen des Oberbegriffes des Anspruches 1 und ein Verfahren zum Betreiben eines hydraulischen oder elektromotorischen Werkzeuges nach den Merkmalen des Oberbegriffes des Anspruches 10.

Derartige Werkzeuge, insbesondere auch in Form von hydraulisch oder elektromotorisch betriebenen Werkzeugen, sind bereits in vielfältiger Hinsicht bekannt. Es wird beispielsweise auf die WO 99/19947 A beziehungsweise die US 6,532,790 B2, die WO 03/084719 A2 beziehungsweise die US 7,254,982 B2 verwiesen. Darüber hinaus wird auf einen Stand der Technik gemäß dem DE 10 2006 058 825 A1 verwiesen beziehungsweise die US 6,965,214 B2.

Aus der US 2006/0228936 A1 ist ein elektromotorisch betätigbares Werkzeug bekannt, bei welchem der Akkumulator zufolge eines in einem Handbereich des Werkzeuges angeordneten Drehteil relativ zu dem Handbereich drehbar ist.

Im Übrigen ist zum Stand der Technik noch auf die WO 2007/058596 A1, die den Oberbegriff des Patentanspruchs 1 offenbart, sowie auf die

EP 2 200 145 A1, die JP 2011 229317 A, die EP 1 833 894A2, die US 2005/153596 A1 und die CN 2 659 647 Y zu verweisen.

Soweit die vorgenannten Geräte Adapter aufweisen, wird mitunter als ungünstig empfunden, dass die Adapter ohne Weiteres von dem Gerät wieder lösbar sind.

Ausgehend von dem genannten Stand der Technik beschäftigt sich die Erfindung mit der Aufgabe, eine günstige Verbindung eines Adapters mit einem Geräteschaft eines derartigen Gerätes anzugeben.

Diese Aufgabe ist beim Gegenstand des Anspruches 1 gelöst, wobei darauf abgestellt ist, dass die Rastverbindung des Adapters zu dem Geräteschaft nicht ohne Zerstörung eines Teils des Adapters aufhebbar ist. Somit kann in einfachster Weise eine Bestückung eines Geräteschaftes mit einem Adapter erfolgen, wobei für den Benutzer gleichsam eine feststehende Konfiguration gegeben ist. Ohne zerstörend auf den Adapter einzuwirken, kann er das so modifizierte Gerät nur noch mit dem an den Adapter passenden Akkumulator betreiben. Diese Aufgabe ist weiter beim Gegenstand des Anspruches 10 gelöst, wobei vefahrensmäßig darauf abgestellt ist, dass die Rastverbindung nicht ohne Zerstörung eines Teils des Adapters aufgehoben wird.

Der zwischen dem Geräteschaft und dem Akkumulator vorgesehene Adapter kann mittels Rastverbindung zu dem Geräteschaft und dem Akkumulator sicherbar sein.

Die aufgezeigte Lösung ist beispielsweise vorteilhaft, wenn ein Gerätehersteller nach Kundenwunsch die Geräte im Hinblick auf mehrere mögliche Akkumulatoren ausbilden will, andererseits aber ein Kunde mit einem einmal gewählten Akkumulator auch weiter arbeiten will. Bei einem Wechsel oder Wiederaufladen des Akkumulators soll möglichst kein Abnehmen des Adapters erfolgen, um Störungen zu vermeiden.

Eine weitere Problematik mit derartigen Adaptern ist darin gegeben, dass die Akkumulatoren neben den Elektrokontakten zur elektrischen Leistungsübertragung, also einem elektrischen Plus- und einem elektrischen Minuskontakt, auch noch Kontakte aufweisen, mit welchen gewisse Informationen aus dem Akkumulator im Gerät abgerufen und ausgewertet werden können, etwa betreffend den Ladezustand und/oder die Temperatur des Akkumulators. Solche Informationen können auch etwa in einem Ladegerät von Bedeutung sein und über die genannten Kontakte dort ausgelesen werden.

Hierzu wird vorgeschlagen, dass der Adapter jedenfalls auf seiner dem Akkumulator zugewandten Seite Kontakte zur Erfassung und gegebenenfalls Durchleitung von Werten betreffend die Temperatur und/oder den Ladezustand, gegebenenfalls auch im Hinblick auf einzelne Zellen des Akkumulators, aufweist. Wenn diese Kontakte nur auf der Seite des Akkumulators ausgebildet sind, kann in dem Adapter selbst bereits eine Auswerteschaltung vorgesehen sein, die auch über Anzeigemittel verfügt, mit welchen nach außen beispielsweise eine unzulässige Temperatur und/oder ein bestimmter Ladezustand oder das Unterschreiten eines bestimmten Ladezustands angezeigt wird.

Die Durchleitung von Werten kann über übliche elektrische Leiterbahnen erfolgen. Sie kann aber auch - zumindest streckenweise - optisch, magnetisch, per Funk und/oder mechanisch erfolgen.

Weiter wird vorgeschlagen, dass der Adapter zur Unterbrechung einer Leistungsversorgung des Verpressgerätes ausgebildet ist. Dies ist insbesondere von Bedeutung, wenn etwa, wie schon grundsätzlich angeführt, eine unzulässig hohe Temperatur bezüglich des Akkumulators erfasst wird und/oder ein Temperaturanstieg, der das Erreichen einer unzulässig hohen Temperatur als wahrscheinlich erkennen lässt und/oder wenn ein Kurzschluss erfasst wird und/oder mögliche weitere Ereignisse, die ein sofortiges Abschalten der Elektroversorgung des Werkzeugs angezeigt sein lassen.

Der Adapter ist somit über seine Funktion hinaus, über unterschiedliche Schnittstellen den Akkumulator mit dem Gerät zu verbinden, auch dahingehend ausgebildet, eine Sicherheitsfunktion zu übernehmen.

Weiter wird vorgeschlagen, dass der Adapter zusammen mit dem angekoppelten Akkumulator an einem Ladegerät andockbar ist derart, dass der Akkumulator mit dem Ladegerät vermittels des Adapters verbunden ist. Der Adapter ist hierbei dazu genutzt, den Ladestrom von dem Ladegerät zu dem Akkumulator zum Aufladen desselben zu übertragen.

Der Leistungsschalter ist weiter bevorzugt derart ausgebildet, dass er in Abhängigkeit eines Zustandsdatums des Akkumulators selbsttätig schaltet. Ein Zustandsdatum kann etwa, wie schon ausgeführt, eine in dem Akkumulator erfasste Temperatur und/oder einen Ladezustand des Akkumulators oder dergleichen sein.

Weiter kann auch bevorzugt vorgesehen sein, im Zusammenhang mit einer oder mehreren der vorbeschriebenen Ausgestaltungen, oder hinsichtlich eines solchen Adapters, wie er hier angesprochen ist, als solchem, dass der Adapter zum Abgeben eines Signals, beispielsweise eines Licht- und/oder Tonsignals, ausgebildet ist. Eine Signalabgabe kann beispielsweise auch im Hinblick auf eine erfasste erhöhte Temperatur und/oder einen erfassten bestimmten Ladezustand und/oder einen Kurzschluss oder ein ähnliches Ereignis hin abgebbar sein.

Nachstehend ist die Erfindung des Weiteren anhand der beigefügten Zeichnung, die jedoch lediglich Ausführungsbeispiele darstellt, erläutert. Hierbei zeigt:
- Fig. 1: eine Draufsicht auf einen Adapter mit einem daran unterseitig angekoppelten Akkumulator;
- Fig. 2: eine mögliche Verbindung eines Geräteschaftes mit einem Adapter und daran befindlichem Akkumulator;
- Fig. 3: der zusammengesetzte Geräteschaft mit Adapter und Akkumulator;

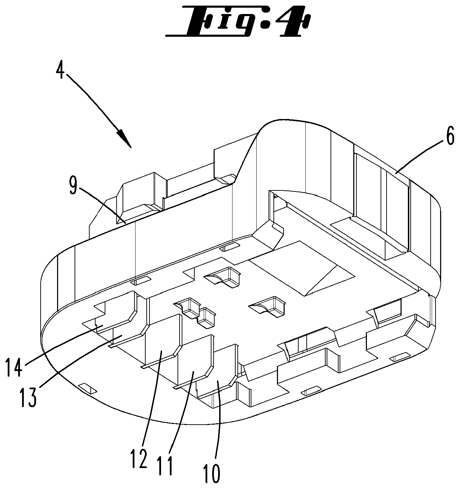

- Fig. 4: eine perspektivische Ansicht von unten eines Adapters;
- Fig. 5: eine Explosionsdarstellung eines Adapters;
- Fig. 6: einen Querschnitt durch den Gerätefuß gemäß Fig. 3 im Bereich des Adapters;
- Fig. 7: eine Verdeutlichung der möglichen Aufhebung der Rastverbindung zwischen dem Adapter und dem Geräteschaft (keine Ausführung gemäß der Erfindung);

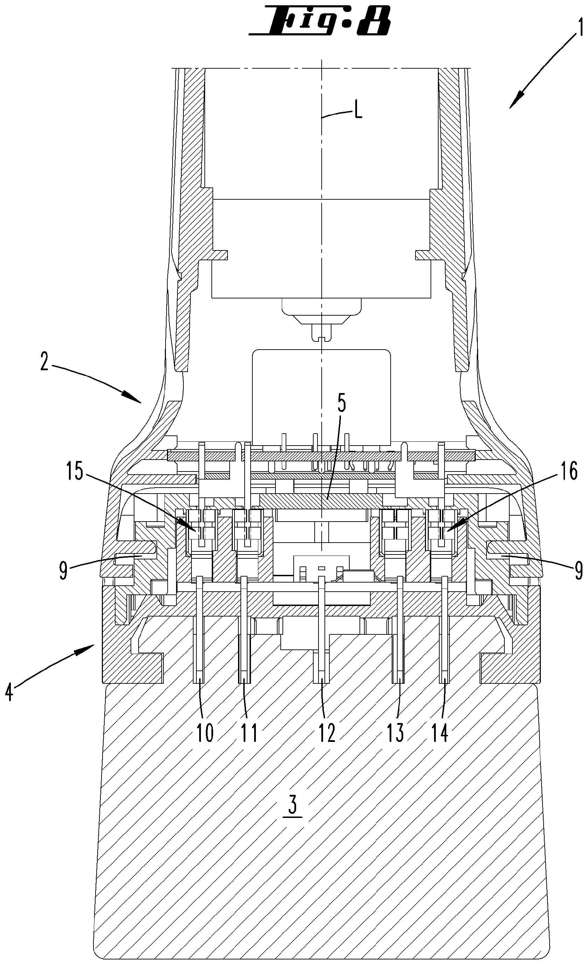

- Fig. 8: einen Querschnitt gemäß Fig. 6, jedoch 90° gedreht bezüglich einer Geräteschaft-Längsachse;
- Fig. 9: eine schematische Darstellung einer in dem Adapter ausgeführten elektrischen Schaltung zur Leistungsunterbrechung;
- Fig. 10: eine Kombination eines Adapters mit einem Akkumulator aufgesetzt auf ein Ladegerät;

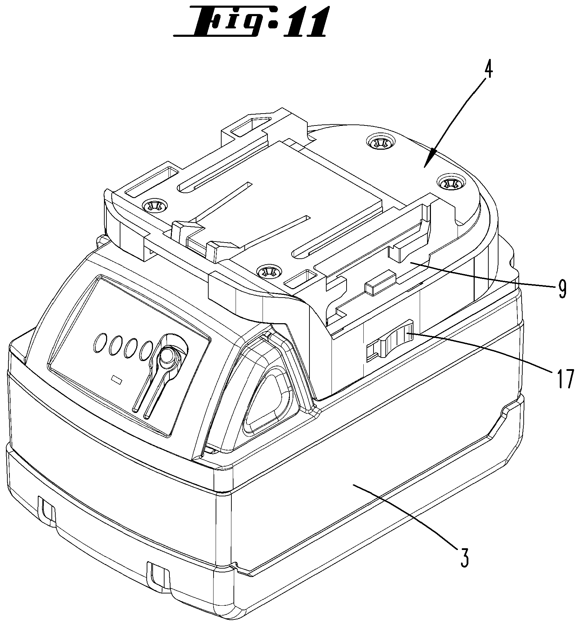

- Fig. 11: eine Kombination eines Akkumulators zweiter Art mit einem angepassten Adapter;

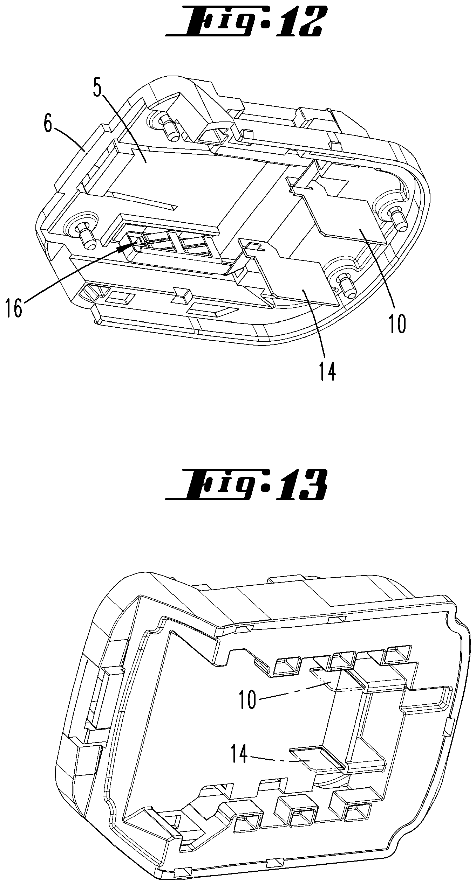

- Fig. 12/ Fig. 13: einen Akkumulator zweiter Art, hinsichtlich seines zweiteiligen Aufbaus in Explosionsdarstellung; und

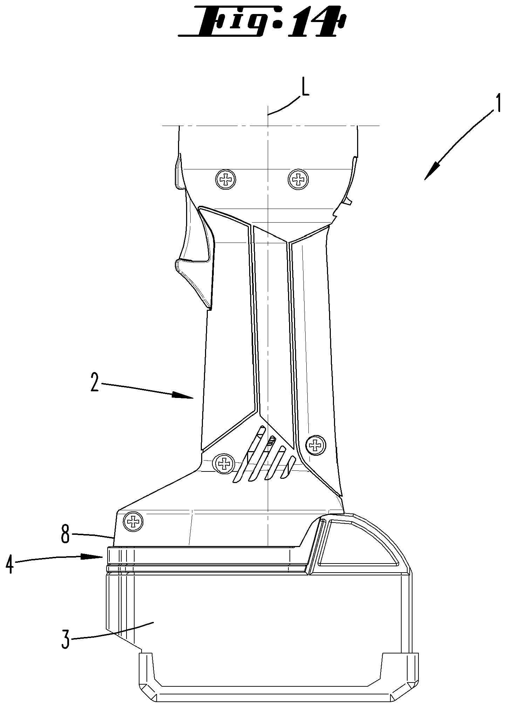

- Fig. 14: eine Seitenansicht eines Geräteschaftes angekoppelt mit einem Adapter und Akkumulator gemäß Fig. 11.

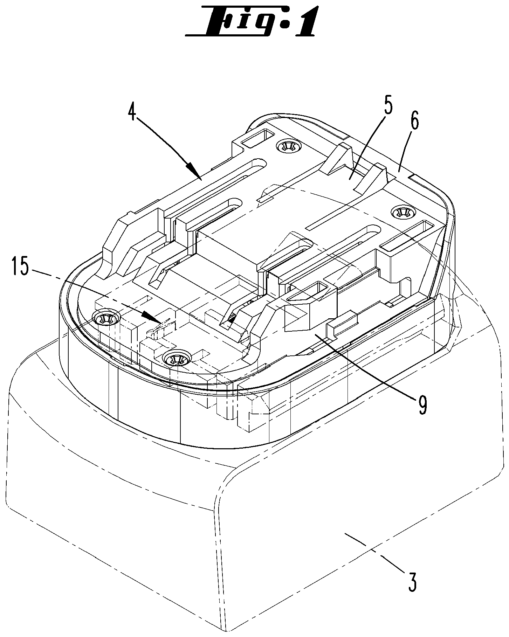

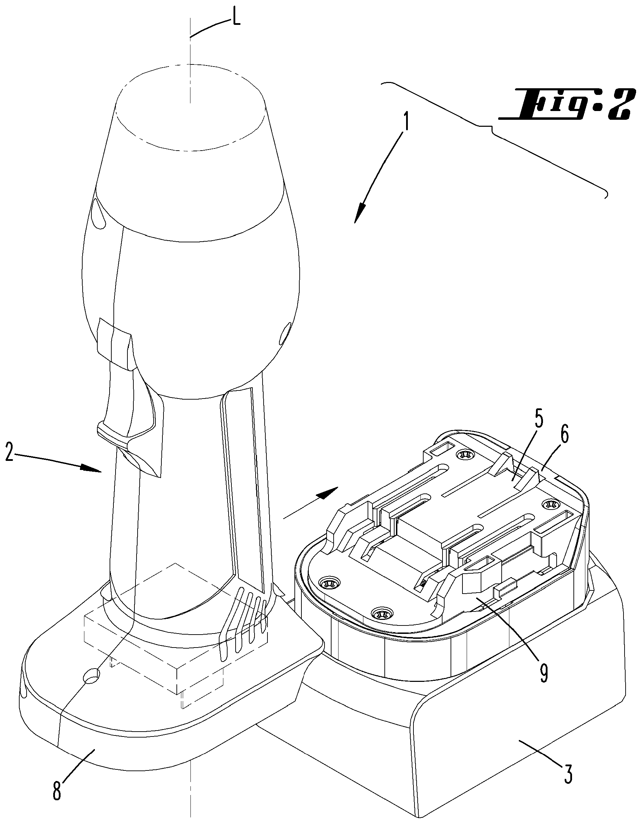

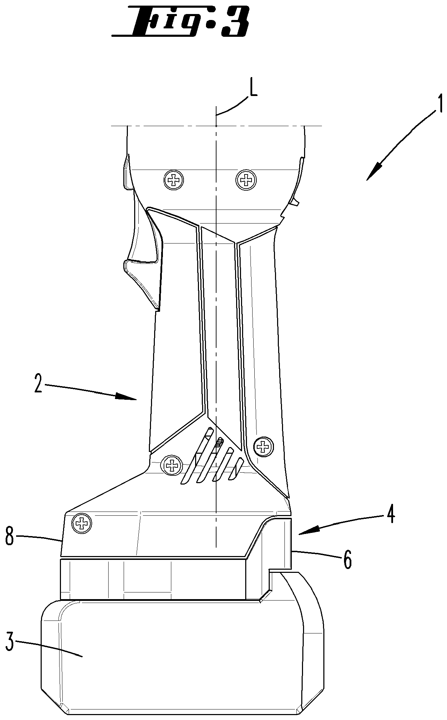

Dargestellt und beschrieben ist, zunächst mit Bezug zu den Fig. 1 bis 3, ein hier nur teilweise dargestelltes Werkzeug 1, das einen Geräteschaft 2 aufweist, mit welchem ein Akkumulator 3 vermittels eines Adapters 4 verbindbar ist. Der Adapter 4 kann an die Konfiguration eines ersten Akkumulators 3 angepasst sein. Der Geräteschaft 2 kann an die Konfiguration eines zweiten Akkumulators 3 angepasst sein, der dann ohne den Adapter 4 unmittelbar mit dem Geräteschaft 2 verbunden werden kann.

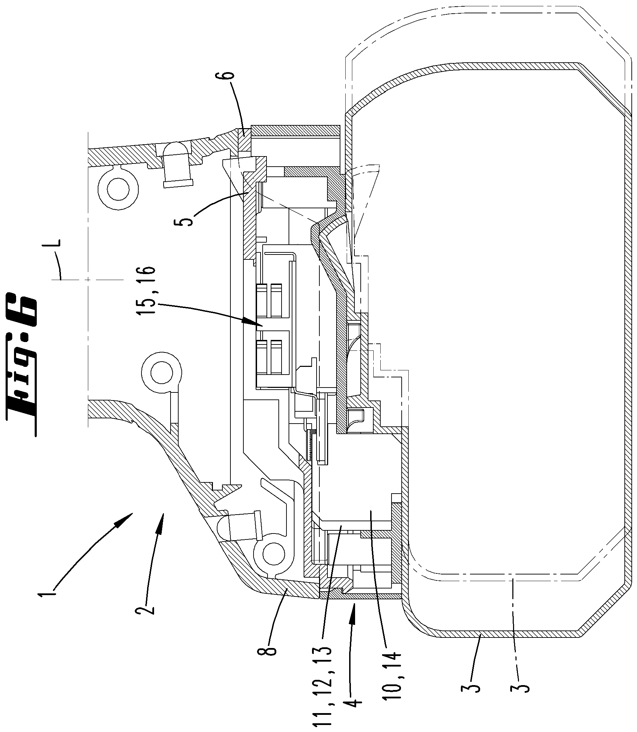

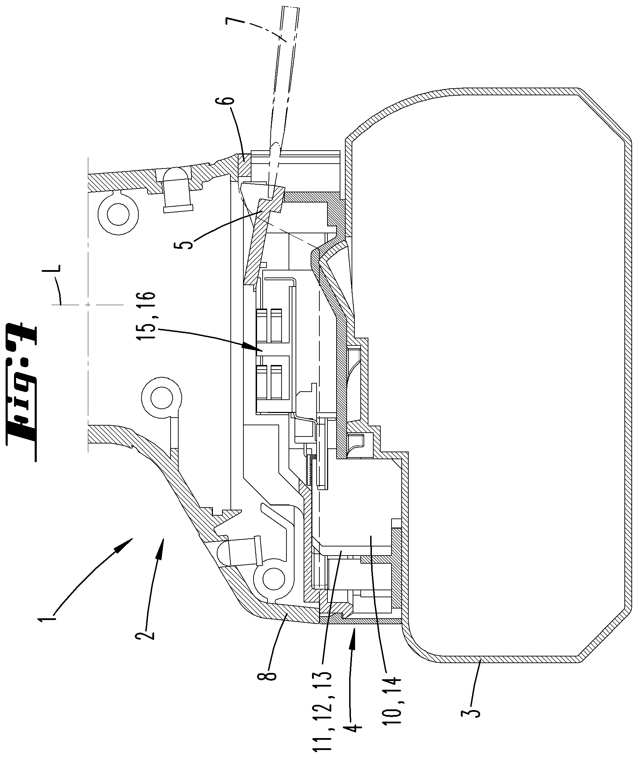

Der Adapter 4 ist mit dem Geräteschaft 2 rastverbindbar, wie sich dies in weiterer Einzelheit aus den Figuren 6 und 7 ergibt. Zur Rastverbindbarkeit zwischen dem Geräteschaft 2 und dem Adapter 4 ist bevorzugt in dem Adapter 4 ein Löseteil, beim Ausführungsbeispiel ein gegen Federkraft - hier nach unten - ausweichbares Rastteil 5 vorgesehen. Das Rastteil 5 ist gegenüber einer Außenwandung 6 des Adapters 4 nach innen versetzt. Es muss also in das Innere des Adapters 4 eingegriffen werden, um das Rastteil 5 zu betätigen. Bei der Ausführungsform der Figur 6 ist die Außenwandung 6 durchgehend ausgebildet. Der hier einmal verrastend eingesetzte Adapter 4 kann nicht ohne Zerstörung der Außenwand 6 wieder gelöst werden. Die Außenwand 6 weist auch eine Türe oder Rastöffnung auf.

Wie sich aus Figur 7 (keine Ausführung gemäß der Erfindung) ergibt, kann im Falle, dass die Außenwand 6 nicht durchgehend gebildet ist, die mögliche Betätigung des Rastteils 5 auch mittels eines Werkzeugs, wie eines hier nur teilweise dargestellten Schraubendrehers 7 möglich sein.

Bei dem hier dargestellten Adapter 4 handelt es sich um einen Einschubadapter. Dieser wird im Wesentlichen rechtwinklig zu einer Längsachse L des Geräteschaftes 2 mit dem Geräteschaft 2 schiebeverbunden. Eine vordere Abdeckwandung 8 des Geräteschaftes stellt dabei einen Schiebeanschlag dar. Zudem sind innenseitig des Geräteschaftes bevorzugt Vorsprünge vorgesehen, die mit Ausnehmungen 9 des Adapters zusammenwirken, so dass sich ein schienenartiges Zusammenfahren ergibt. Das Rastteil 5 ist damit das einzige bewegliche Teil, das zur Verankerung des Adapters 4 an dem Geräteschaft 2 erforderlich ist. Alternativ ist auch eine Ausgestaltung in Form eines nicht dargestellten Turm-Adapters möglich. Dieser wird in Längsrichtung des Geräteschaftes 2, üblicherweise durch Einschieben in einen an dem Geräteschaft ausgebildeten Aufnahmeraum, mit dem Gerät verbunden.

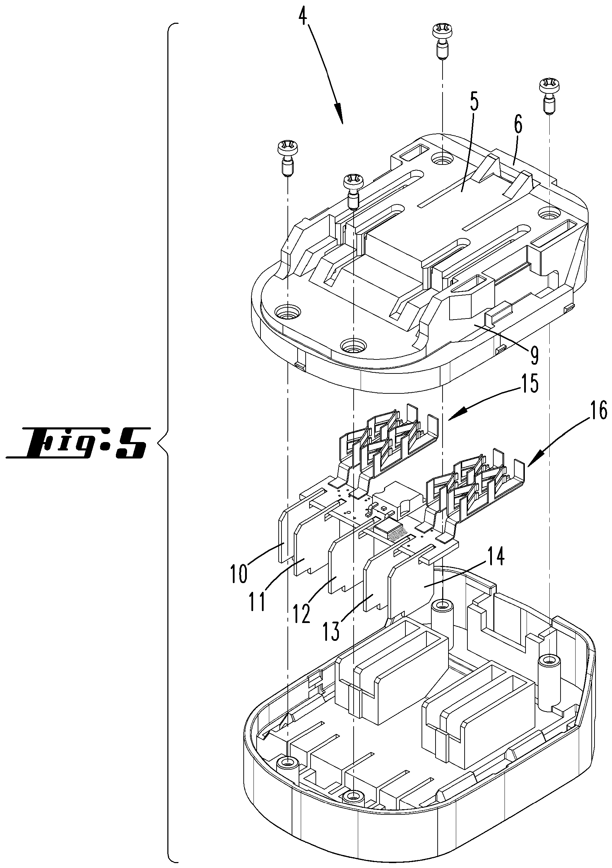

Wie insbesondere aus Figur 5 ersichtlich ist, die eine Explosionsdarstellung des Adapters wiedergibt, sind im Inneren des Adapters 4 Elektrokontakte 10 bis 14 angeordnet, welche nach unten vorragend, in entsprechenden Kontakten des Akkumulators im zusammengesteckten Zustand sind. Die elektrischen Ströme werden durchgeleitet zur Oberseite des Adapters 4, wo entsprechende Kontaktelemente 15, 16 angeordnet sind. Hierbei ist nicht nur eine Durchleitung von Plus und Minus möglich, sondern auch eine Durchleitung von Werten betreffend die Temperatur und/oder den Ladezustand und/oder weitere Daten, die in dem Akkumulator abgefragt werden. Herkömmliche Akkumulatoren stellen derartige Werte an entsprechenden Kontakten zur Verfügung.

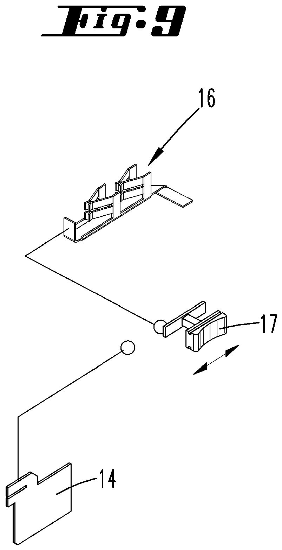

Im Weiteren kann vorgesehen sein, dass innerhalb des Adapters 4, wie aus der in Figur 9 wiedergegebenen elektrischen Schaltung ersichtlich, eine Unterbrechung einer Leistungsversorgung möglich ist, dies über einen Schalter 17. Der Schalter 17 kann entweder selbsttätig betätigbar sein, etwa indem eine gemessene Temperatur oder ein sonstiges gemessenes Datum innerhalb des Adapters und/oder durch Durchleitung der Werte zunächst in das Gerät, in dem Gerät, in einem Mikroprozessor oder dergleichen, mit zulässigen Daten verglichen wird und in Abhängigkeit hiervon die Leistungsunterbrechung vorgenommen wird oder nicht. Der Schalter kann auch von Hand betätigbar vorgesehen sein.

Weiter kann vorgesehen sein, was im Einzelnen nicht dargestellt ist, dass der Adapter zum Abgeben eines Signals, beispielsweise eines Licht- und/oder Tonsignals, ausgebildet ist.

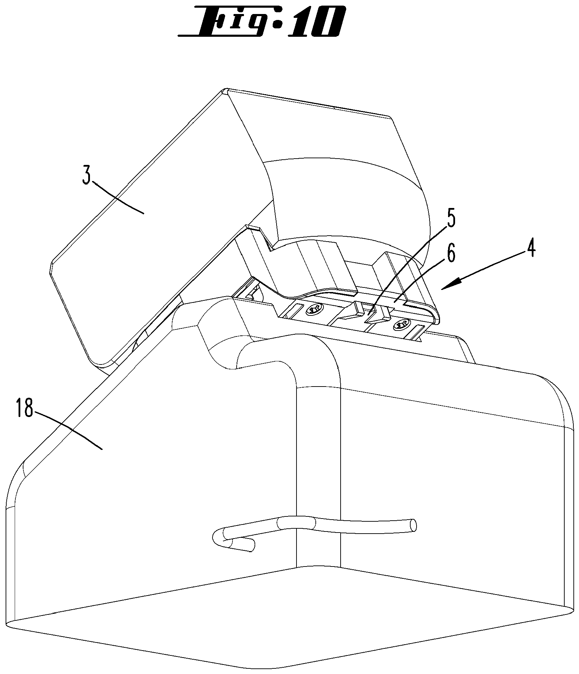

Auch kann der Akkumulator 3 zusammen mit einem steckverbundenen Adapter 4, wie etwa in den Figuren 9 und 10 dargestellt, aufladbar sein. Hierbei ist ein Ladegerät 18 vermittels des Adapters 4 mit dem Akkumulator 3 zum Aufladen verbunden. Dies ist insbesondere deshalb möglich, weil der Adapter 4 bei dieser Ausführungsform mehr elektrische Durchleitungskontakte aufweist als nur die zur elektrischen Leistungsversorgung erforderlichen zwei elektrischen Kontakte, nämlich weiter auch elektrische Durchleitungskontakte betreffend die Temperatur des Akkumulators und/oder den Ladezustand einer Ladezelle des Akkumulators etc.

Die Durchleitung von Daten kann auch allein oder ergänzend, auf optischem, magnetischem, funktechnischem oder mechanischem Wege erfolgen.

### Bezugszeichenliste:

- 1: Werkzeug
- 2: Geräteschaft
- 3: Akkumulator
- 4: Adapter
- 5: Rastteil
- 6: Außenwandung
- 7: Schraubendreher
- 8: Abdeckwandung
- 9: Ausnehmung
- 10: Elektrokontakt
- 11: Elektrokontakt
- 12: Elektrokontakt
- 13: Elektrokontakt
- 14: Elektrokontakt
- 15: Kontaktelement
- 16: Kontaktelement
- 17: Schalter
- 18: Ladegerät

- L: Längsachse

## Patentansprüche

1. Hydraulisch oder elektromotorisch betriebenes Werkzeug (1), beispielsweise ein Verpressgerät, mit einem Geräteschaft (2), der zumindest einen ersten und einen zweiten Elektrokontakt aufweist und mit einem mit dem Geräteschaft (2) rastverbindbaren Akkumulator (3), wobei zwischen dem Geräteschaft (2) und dem Akkumulator (3) ein an dem Geräteschaft (2) mittels einer Rastverbindung zu dem Geräteschaft (2) sicherbarer Adapter (4) vorgesehen ist, wobei der Adapter (4) zu dem Akkumulator (3) sicherbar ist, **dadurch gekennzeichnet, dass** die Rastverbindung des Adapters (4) zu dem Geräteschaft (2) ohne Zerstörung eines Teils des Adapters (4) nicht aufhebbar ist.

2. Werkzeug nach Anspruch 1, **dadurch gekennzeichnet, dass** der Adapter (4) an die Konfiguration eines ersten Akkumulators (3) angepasst ist und dass der Geräteschaft (2) an die Konfiguration eines zweiten Akkumulators (3) angepasst ist.

3. Werkzeug nach einem der vorhergehenden Ansprüche, **dadurch gekennzeichnet, dass** der Adapter (4) jedenfalls auf seiner dem Akkumulator (3) zugewandten Seite Kontakte zur Erfassung und gegebenenfalls Durchleitung von Werten betreffend die Temperatur und/oder den Ladezustand, gegebenenfalls auch im Hinblick auf einzelne Zellen des Akkumulators (3), aufweist.

4. Werkzeug nach einem der vorhergehenden Ansprüche, **dadurch gekennzeichnet, dass** der Adapter (4) zur Unterbrechung einer Leistungsversorgung des Werkzeugs ausgebildet ist.

5. Werkzeug nach einem der vorhergehenden Ansprüche, **dadurch gekennzeichnet, dass** in dem Akkumulator (3) ein Leistungsschalter (17) angeordnet ist.

6. Werkzeug nach Anspruch 5, **dadurch gekennzeichnet, dass** der Leistungsschalter (17) in Abhängigkeit eines Zustandsdatums des Akkumulators (3) selbsttätig schaltet.

7. Werkzeug nach einem der Ansprüche 5 oder 6, **dadurch gekennzeichnet, dass** der Leistungsschalter (17) in Abhängigkeit einer Temperatur und/oder des Ladezustandes des Akkumulators (3) schaltet.

8. Werkzeug nach einem der vorhergehenden Ansprüche, **dadurch gekennzeichnet, dass** der Akkumulator (3) mit steckverbundenem Adapter (4) aufladbar ist, wobei der Akkumulator (3) mit dem Ladegerät (18) vermittels des Adapters (4) verbunden ist.

9. Werkzeug nach einem der vorhergehenden Ansprüche, **dadurch gekennzeichnet, dass** der Adapter (4) zum Abgeben eines Signals, beispielsweise eines Licht- und/oder Tonsignals, ausgebildet ist.

10. Verfahren zum Betreiben eines hydraulischen oder elektromotorischen Werkzeuges (1), beispielswiese eines Verpressgerätes, mit einem Geräteschaft (2), der zumindest einen ersten und einen zweiten Elektrokontakt aufweist und mit einem mit dem Geräteschaft (2) rastverbindbaren Ackumulator (3), wobei zwischen dem Geräteschaft (2) und dem Akkumulator (3) ein Adapter (4) vorgesehen wird, der mit dem Geräteschaft (2) mittels einer Rastverbindung gesichert wird, wobei der Adapter (4) mit dem Akkumulator (3) gesichert wird, **dadurch gekennzeichnet, dass** die Rastverbindung nicht ohne Zerstörung eines Teils des Adapters (4) aufgehoben wird.

11. Verfahren nach Anspruch 10, **dadurch gekennzeichnet, dass** der Adapter die Merkmale eines der Ansprüche 2 bis 8 aufweist.

## Claims

1. A hydraulically or electric motor operated tool (1), for example a crimping device, with a device shaft (2) that exhibits at least a first and second electrical contact, and with an accumulator (3) that can be latched with the device shaft (2), wherein an adapter (4) that can be secured by a latching connection to the device shaft (2) and accumulator (3) is provided on the device shaft (2) between the device shaft (2), wherein the adapter (4) can be secured to the accumulator (3), **characterized in that** the latching connection to the device shaft (2) cannot be released without destroying part of the adapter (4).

2. The tool according to claim 1, **characterized in that** the adapter (4) is adapted to the configuration of a first accumulator (3) and that the device shaft (2) is adapted to the configuration of a second accumulator (3).

3. The tool according to one of the preceding claims, **characterized in that** at least the side of the adapter (4) facing the accumulator (3) exhibits contacts for acquiring and, if needed, transmitting values about the temperature and/or charging status, potentially also as relates to individual cells of the accumulator (3).

4. The tool according to one of the preceding claims, **characterized in that** the adapter (4) is designed to interrupt the power supply to the tool.

5. The tool according to one of the preceding claims, **characterized in that** a power switch (17) is situated in the accumulator (3).

6. The tool according to claim 5, **characterized in that** the power switch (17) automatically actuates as a function of a condition datum of the accumulator (3).

7. The tool according to one of the claims 5 or 6, **characterized in that** the power switch (17) actuates as a function of a temperature and/or the charging status of the accumulator (3).

8. The tool according to one of the preceding claims, **characterized in that** the accumulator (3) can be charged with a plugged-in adapter (4), wherein the accumulator (3) is connected with the charging device (18) via the adapter (4).

9. The tool according to one of the preceding claims, **characterized in that** the adapter (4) is designed to output a signal, for example a light and/or audio signal.

10. Method for operating a hydraulic or electromotive tool (1), for example a pressing device, with a device shaft (2), which has at least one first and one second electrical contact, and with an accumulator (3) which can be latched to the device shaft (2), an adapter (4) being provided between the device shaft (2) and the accumulator (3), which adapter (4) is secured to the device shaft (2) by means of a latching connection, the adapter (4) being secured to the accumulator (3), **characterized in that** the latching connection cannot be released without destroying part of the adapter (4).

11. Method according to claim 10, **characterized in that** adapter has the features of one of the claims 2 to 8.

## Revendications

1. Outil (1) à fonctionnement hydraulique ou à moteur électrique, par exemple un appareil de pressage, avec un manche d'appareil (2) qui présente au moins un premier et un deuxième contact électrique et avec une batterie (3) pouvant être reliée au manche d'appareil (2) par encliquetage, dans lequel un adaptateur (4) est prévu entre le manche d'appareil (2) et la batterie (3) lequel peut être fixé au manche d'appareil (2) au moyen d'une liaison par encliquetage avec le manche d'appareil (2), l'adaptateur (4) pouvant être fixé à la batterie (3), **caractérisé en ce que** la liaison par encliquetage de l'adaptateur (4) avec le manche d'appareil (2) ne peut pas être supprimée sans détruire une partie de l'adaptateur (4).

2. Outil selon la revendication 1, **caractérisé en ce que** l'adaptateur (4) est adapté à la configuration d'une première batterie (3) et **en ce que** le manche d'appareil (2) est adapté à la configuration d'une deuxième batterie (3).

3. Outil selon l'une des revendications précédentes, **caractérisé en ce que** l'adaptateur (4) présente, en tout cas sur son côté tourné vers la batterie (3), des contacts pour la collecte et éventuellement la transmission de valeurs concernant la température et/ou l'état de charge, le cas échéant aussi en ce qui concerne les différentes cellules de la batterie (3).

4. Outil selon l'une des revendications précédentes, **caractérisé en ce que** l'adaptateur (4) est conçu pour interrompre une alimentation de puissance de l'outil.

5. Outil selon l'une des revendications précédentes, **caractérisé en ce qu'**un interrupteur de puissance (17) est agencé dans la batterie (3).

6. Outil selon la revendication 5, **caractérisé en ce que** l'interrupteur de puissance (17) commute automatiquement en fonction d'une donnée d'état de la batterie (3).

7. Outil selon l'une des revendications 5 ou 6, **caractérisé en ce que** l'interrupteur de puissance (17) commute en fonction d'une température et/ou de l'état de charge de la batterie (3).

8. Outil selon l'une des revendications précédentes, **caractérisé en ce que** la batterie (3) est rechargeable avec l'adaptateur (4) relié par enfichage, la batterie (3) étant relié au chargeur (18) au moyen de l'adaptateur (4) .

9. Outil selon l'une des revendications précédentes, **caractérisé en ce que** l'adaptateur (4) est conçu pour émettre un signal, par exemple un signal lumineux et/ou sonore.

10. Procédé pour faire fonctionner un outil (1) hydraulique ou à moteur électrique, par exemple un appareil de pressage, avec un manche d'appareil (2) qui présente au moins un premier et un deuxième contact électrique et avec une batterie (3) pouvant être reliée au manche d'appareil (2) par encliquetage, dans lequel un adaptateur (4) est prévu entre le manche d'appareil (2) et la batterie (3) lequel est fixé au manche d'appareil (2) au moyen d'une liaison par encliquetage, l'adaptateur (4) étant fixé à la batterie (3), **caractérisé en ce que** la liaison par encliquetage n'est pas supprimée sans détruire une partie de l'adaptateur (4).

11. Procédé selon la revendication 10, **caractérisé en ce que** l'adaptateur présente les caractéristiques de l'une des revendications 2 à 8.
